(19) Europäisches Patentamt / European Patent Office / Office européen des brevets

(11) **EP 3 845 818 B1**

(12) **EUROPEAN PATENT SPECIFICATION**

(45) Date of publication and mention
of the grant of the patent:
**09.03.2022 Bulletin 2022/10**

(21) Application number: **19934332.8**

(22) Date of filing: **12.12.2019**

(51) International Patent Classification (IPC):
**F24D 3/18** *(2006.01)*      **F25B 49/02** *(2006.01)*
**F24D 19/10** *(2006.01)*      **G05D 23/19** *(2006.01)*

(52) Cooperative Patent Classification (CPC):
**F24D 19/1039; F25B 30/02; F25B 49/022;
G05D 23/1919;** F24D 19/1054; F24D 19/1072;
F24D 2200/123; F24D 2220/042; F25B 2339/047;
F25B 2500/19; F25B 2600/0253; F25B 2700/21161;
Y02B 30/70

(86) International application number:
**PCT/CN2019/124778**

(87) International publication number:
**WO 2021/082202 (06.05.2021 Gazette 2021/18)**

(54) **WATER TEMPERATURE CONTROL METHOD FOR HEAT PUMP SYSTEM, AND HEAT PUMP SYSTEM**

WASSERTEMPERATURREGELUNGSVERFAHREN FÜR EIN WÄRMEPUMPENSYSTEM UND WÄRMEPUMPENSYSTEM

PROCÉDÉ DE RÉGULATION DE TEMPÉRATURE D'EAU POUR SYSTÈME DE POMPE À CHALEUR ET SYSTÈME DE POMPE À CHALEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.10.2019 CN 201911042851**

(43) Date of publication of application:
**07.07.2021 Bulletin 2021/27**

(73) Proprietor: **GUANGDONG PHNIX ECO-ENERGY SOLUTION LTD.**
**Guangzhou, Guangdong 511400 (CN)**

(72) Inventors:
• **LIU, Zhili**
**Guangzhou**
**Guangdong 511400 (CN)**
• **WU, Silang**
**Guangzhou**
**Guangdong 511400 (CN)**
• **YE, Jingfa**
**Guangzhou**
**Guangdong 511400 (CN)**
• **LI, Caoxuan**
**Guangzhou**
**Guangdong 511400 (CN)**

(74) Representative: **Petculescu, Ana-Maria**
**Bayramoglu Law Offices LLC Türkiye**
**Irtibat Ofisi, Mira Office, Kanuni Sultan**
**Süleyman Boulevard, 5387. street**
**Beytepe, floor 12, no:50**
**06800 Cankaya, Ankara (TR)**

(56) References cited:
EP-A1- 2 530 391       EP-A1- 3 299 744
EP-A1- 3 333 502       WO-A1-2018/000515
CN-A- 103 836 789      CN-A- 104 833 102
CN-A- 107 300 231      CN-A- 107 300 231
CN-A- 110 513 930      JP-A- 2005 098 546
JP-A- 2005 147 542

## Description

This application claims priority to Chinese Patent No. CN201911042851.1, filed with the China National Intellectual Property Administration on October 29, 2019 and entitled "WATER TEMPERATURE CONTROL METHOD FOR HEAT PUMP SYSTEM AND HEAT PUMP SYSTEM.

## TECHNICAL FIELD

This application relates to the field of heat pump technologies, and in particular, to a water temperature control method for a heat pump system, and a heat pump system.

## BACKGROUND

As the advantages of low temperature heat pumps in the field of commercial heating become more prominent, heat pumps for commercial heating are becoming more popular, and higher energy efficiency and higher comfort levels have become the pursuit of the industry. Currently, heat pump heating projects mostly use a primary pump system or a secondary pump system based on actual site conditions. The primary pump system has obvious advantages over the secondary pump system in terms of saving operation costs and engineering installation costs of a secondary pump because the primary pump system has no secondary pump or energy storage tank. However, the inventor of this application discovered in research that because the primary pump system uses a fixed-frequency heat pump, whenever terminal load changes, equipment cannot adapt to the terminal load change, resulting in large fluctuations in the outlet water temperature.

EP 3 333 502 A1 relates to a heat pump system including a first controller, a second controller, and a remote control apparatus. The compressor, the decompressor, the air blower, the outside air temperature sensor, the outlet temperature sensor, and the inlet temperature sensor are electrically connected to the first controller. The outlet temperature sensor detects outlet temperature, outside air temperature sensor detects outside air temperature sensor and inlet temperature sensor detects temperature of the heating medium flowing into the heating heat exchanger. The fundamental frequency calculation unit calculates the fundamental frequency in accordance with the temperature difference between target outlet temperature and in accordance with the current outside air temperature with the helping of look-up table for frequency determination.

EP 3 299 744 A1 relates to a method and a system for controlling frequency of a variable-frequency compressor in a heat pump water heater. The system is based on that a temperature difference between the water temperature and the preset water temperature may be acquired firstly, and then a temperature range including the temperature difference may be determined, and a correction value may be acquired according to the temperature range, and a target frequency of the variable-frequency compressor may be determined according to the current frequency of the variable-frequency compressor and the correction value. The pre-stored corresponding relationship between the temperature range and the correction value is shown in look-up table for frequency determination.

## SUMMARY

This application provides a water temperature control method for a heat pump system, and a heat pump system, so as to solve an existing technical problem that an outlet water temperature of primary pump system equipment fluctuates due to a change in terminal load. According to this application, the equipment can adapt to the change in terminal load. After a terminal changes, the output water temperature is dynamically adjusted to keep the water temperature constant, improving performance of the primary heat pump system.

To solve the foregoing technical problem, an embodiment of this application provides a water temperature control method for a heat pump system, where the heat pump system includes an equipment end, a terminal, and a water pump arranged on a pipeline between the equipment end and the terminal; the equipment end has an inverter compressor heat pump; and the water temperature control method includes at least the following steps:

detecting a current outlet water temperature of the equipment end in real time, and obtaining a current outlet water temperature difference between the current outlet water temperature and a specified outlet water temperature; and determining a current compressor energy level range based on the current outlet water temperature difference, and obtaining a current compressor frequency corresponding to the current compressor energy level range from a preset energy level range table, so as to control a compressor of the inverter compressor heat pump by using the current compressor frequency.

A formula for determining the current compressor energy level range of the compressor is as follows: EL=A*B+C;

in the formula, EL represents the current compressor energy level range of the compressor, A represents a coefficient, B represents a preset energy level gain, and C represents an accumulated value;

$A=Ka^*\Delta T$ and $C=Kc^*\Delta T^*\Delta t$, where Ka represents a preset first temperature difference gain, $\Delta T$ represents the current outlet water temperature difference, Kc represents a preset second temperature difference gain, and $\Delta t$ represents a time interval.

In a preferred solution, the step of determining the current compressor energy level range based on the current outlet water temperature difference is specifically:

determining the current compressor energy level range based on the current outlet water temperature difference at any preset time point after the compressor is started, where a time interval between two adjacent preset time points is $\Delta t$.

In a preferred solution, the method further includes:

determining whether the current outlet water temperature difference is within a preset temperature difference threshold range;

if the current outlet water temperature difference is within the preset temperature difference threshold range, keeping the current compressor energy level range that is determined based on the current outlet water temperature difference, and controlling the compressor of the inverter compressor heat pump by using the current compressor frequency corresponding to the current compressor energy level range; or

if the current outlet water temperature difference is not within the preset temperature difference threshold range, redetermining the current compressor energy level range to be a new energy level range based on the current outlet water temperature difference, and re-obtaining a current compressor frequency corresponding to the new energy level range from the preset energy level range table, so as to control a compressor frequency rise or drop of the inverter compressor heat pump.

In a preferred solution, a lower threshold and an upper threshold of the preset temperature difference threshold range are a specified negative temperature difference threshold and a specified positive temperature difference threshold, respectively;

the step in which if the current outlet water temperature difference is not within the preset temperature difference threshold range, the current compressor energy level range is redetermined to be a new energy level range based on the current outlet water temperature difference, and a current compressor frequency corresponding to the new energy level range is re-obtained from the preset energy level range table, so as to control a compressor frequency rise or drop of the inverter compressor heat pump is specifically:

when the current outlet water temperature difference is greater than or equal to the specified positive temperature difference threshold, redetermining the current compressor energy level range to be the new energy level range based on the current outlet water temperature difference, and re-obtaining the current compressor frequency corresponding to the new energy level range from the preset energy level range table, so as to control the compressor frequency rise of the inverter compressor heat pump; or

when the current outlet water temperature difference is less than or equal to the specified negative temperature difference threshold, redetermining the current compressor energy level range to be the new energy level range based on the current outlet water temperature difference, and re-obtaining the current compressor frequency corresponding to the new energy level range from the preset energy level range table, so as to control the compressor frequency drop of the inverter compressor heat pump.

This application further provides a heat pump system, where the heat pump system includes a centralized controller, an equipment end, a temperature sensor for detecting an outlet water temperature of the equipment end; a terminal, and a water pump

arranged on a pipeline between the equipment end and the terminal; the equipment end has an inverter compressor heat pump; and the centralized controller is configured to:

detect a current outlet water temperature of the equipment end in real time, and obtain a current outlet water temperature difference between the current outlet water temperature and a specified outlet water temperature; and determine a current compressor energy level range based on the current outlet water temperature difference, and obtain a current compressor frequency corresponding to the current compressor energy level range from a preset energy level range table, so as to control a compressor of the inverter compressor heat pump by using the current compressor frequency.

A formula for determining the current compressor energy level range of the compressor is as follows: EL=A*B+C;

in the formula, EL represents the current compressor energy level range of the compressor, A represents a coefficient, B represents a preset energy level gain, and C represents an accumulated value;

A=Ka*$\Delta T$ and C=Kc*$\Delta T$*$\Delta t$, where Ka represents a preset first temperature difference gain, $\Delta T$ represents the current outlet water temperature difference, Kc represents a preset second temperature difference gain, and $\Delta t$ represents a time interval.

In a preferred solution, the centralized controller is further configured to:
determine the current compressor energy level range based on the current outlet water temperature difference at any preset time point after the compressor is started, where a time interval between two adjacent preset time points is $\Delta t$.

In a preferred solution, the centralized controller is further configured to:

determine whether the current outlet water temperature difference is within a preset temperature difference threshold range;

if the current outlet water temperature difference is within the preset temperature difference threshold range, keep the current compressor energy level range that is determined based on the current outlet water temperature difference, and control the compressor of the inverter compressor heat pump by using the current compressor frequency corresponding to the current compressor energy level range; or

if the current outlet water temperature difference is not within the preset temperature difference threshold range, redetermine the current compressor energy level range to be a new energy level range based on the current outlet water temperature difference, and re-obtain a current compressor frequency corresponding to the new energy level range from the preset energy level range table, so as to control a compressor frequency rise or drop of the inverter compressor heat pump.

In a preferred solution, a lower threshold and an upper threshold of the preset temperature difference threshold range are a specified negative temperature difference threshold and a specified positive temperature difference threshold, respectively;
the centralized controller is further configured to:

when the current outlet water temperature difference is greater than or equal to the specified positive temperature difference threshold, redetermine the current compressor energy level range to be the new energy level range based on the current outlet water temperature difference, and re-obtain the current compressor frequency corresponding to the new energy level range from the preset energy level range table, so as to control the compressor frequency rise of the inverter compressor heat pump; or

when the current outlet water temperature difference is less than or equal to the specified negative temperature difference threshold, redetermine the current compressor energy level range to be the new energy level range based on the current outlet water temperature difference, and re-obtain the current compressor frequency corresponding to the new energy level range from the preset energy level range table, so as to control the compressor frequency drop of the inverter compressor heat pump.

In summary, the embodiments of this application provide a water temperature control method for a heat pump system, and a heat pump system. A beneficial effect of any embodiment is that the equipment end uses an inverter compressor heat pump apparatus instead of an existing fixed-frequency heat pump, so that when the terminal load of the heat pump system changes, the compressor frequency of the equipment end can be adjusted, so as to achieve the purposes of dynamically adjusting the outlet water temperature and keeping the outlet water temperature constant.

In the embodiments of this application, the current outlet water temperature of the equipment end is detected in real time using a temperature sensor; the specified outlet water temperature is obtained from the centralized controller, so as to obtain the current outlet water temperature difference; and the current compressor energy level range is determined based on the current outlet water temperature difference, and then the preset energy level range table is queried to obtain the corresponding current compressor frequency, so as to control the compressor of the inverter compressor heat pump by using the current compressor frequency, so that during the operation of the heat pump system, the compressor frequency of the heat pump system can be dynamically adjusted following the specified outlet water temperature and the current outlet water temperature, thereby ensuring that the water temperature supplied to the terminal by the water pump is kept constant. In this way, when the load of the terminal changes, the affected outlet water temperature change causes the equipment to adjust the compressor frequency so that the current outlet water temperature can be kept constant, and at the same time, the equipment adapts to the change of the terminal load.

## BRIEF DESCRIPTION OF DRAWINGS

To describe the technical solutions in this application more clearly, the following briefly describes the accompanying drawings required for describing the implementations. Apparently, the accompanying drawings in the following description show merely some implementations of this application, and a person of ordinary skill in the art may still derive other drawings from these accompanying drawings without creative efforts.

FIG. 1 is a schematic structural diagram of a heat pump system according to an embodiment of this application; and
FIG. 2 is a flowchart of steps of a water temperature control method for a heat pump system according to a first embodiment of this application.

## DESCRIPTION OF EMBODIMENTS

The following clearly and completely describes the technical solutions in the embodiments of this application with reference to the accompanying drawings in the embodiments of this application. Apparently, the described embodiments are merely some but not all of the embodiments of this application. All the other embodiments obtained by a person of ordinary skill in the art based on the embodiments of this application without any creative efforts shall fall within the protection scope of this application.

In addition, the terms "first" and "second" are merely intended for description purpose, and shall not be understood as an indication or implication of relative importance or implicit indication of a quantity of indicated technical features. Therefore, a feature limited by "first" or "second" may explicitly or implicitly include at least one such feature. In the descriptions of this application, "a plurality of" means two or more, unless otherwise specifically limited.

Descriptions about any process or method described in a flowchart or in another manner herein may be understood as indicating that one or more modules, segments, or parts of code of an executable instruction that is used to implement a specific logical function or a step of a process are included, the scope of preferred implementations of this application includes other implementations, and functions may be performed in a sequence other than a shown or discussed sequence, including in a basically simultaneous manner or a reverse sequence based on the functions concerned. This should be understood by a person skilled in the technical field to which the embodiments of this application belong.

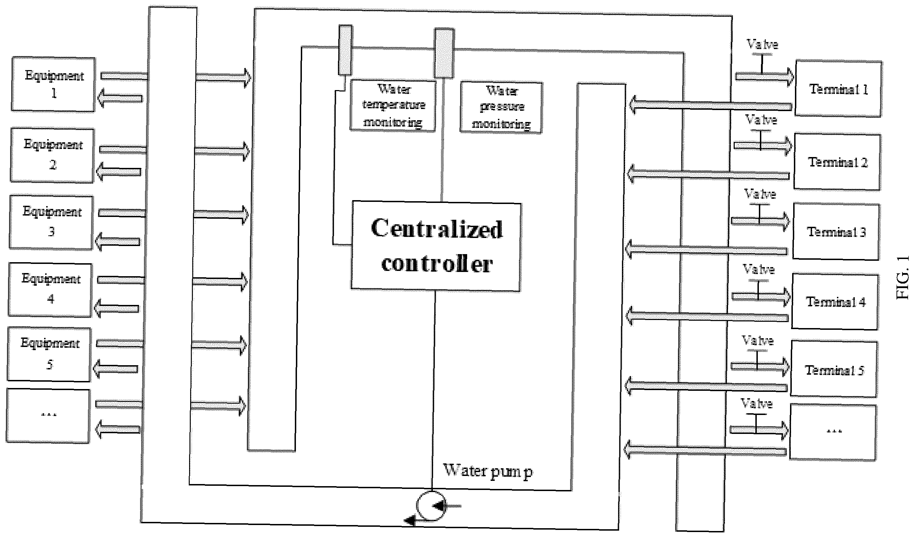

First embodiment of this application:
Referring to FIG. 1, a heat pump system includes some terminals and some equipment ends connected by a water supply pipeline, and the water supply pipeline is provided with a water pump; a water temperature monitoring sensor is placed in the water supply pipeline, and a centralized controller detects an outlet water temperature of the main pipeline in real time; there is an inverter compressor heat pump at the equipment end.

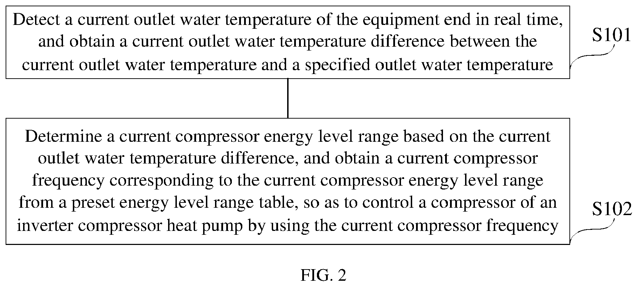

Referring to FIG. 2, based on the heat pump system, the first embodiment of this application provides a water temperature control method for a heat pump system, and the control method includes at least the following steps:
S101: Detect a current outlet water temperature of the equipment end in real time, and obtain a current outlet water temperature difference between the current outlet water temperature and a specified outlet water temperature.

In this embodiment, the current outlet water temperature of the equipment end is collected using the water temperature monitoring sensor, and the specified outlet water temperature is obtained from the centralized controller, so as to calculate the current outlet water temperature difference based on the specified outlet water temperature and the current outlet water temperature.

S102: Determine a current compressor energy level range based on the current outlet water temperature difference, and obtain a current compressor frequency corresponding to the current compressor energy level range from a preset energy level range table, so as to control a compressor of the inverter compressor heat pump by using the current compressor frequency.

In this embodiment, the compressor frequency is set to the maximum frequency Fmax and the minimum frequency Fmin, and the preset energy level range table is set at an interval of 1 Hz (adjustable) starting from Fmin.

Table 1: Energy level range table

| Energy level EL | 0 | 1 | 2 | 3 | 4 | 5 | 6 | ... |
|---|---|---|---|---|---|---|---|---|
| Frequency (Hz) | 0 | Fmin | Fmin+1 | Fmin+ 2 | Fmin+3 | Fmin+4 | Fmin+5 | Fmax |

A formula for determining the current compressor energy level range of the compressor is as follows: EL=A*B+C;
in the formula, EL represents the current compressor energy level range of the compressor.
A represents a coefficient determined by the function A=f($\Delta$T) for the current outlet water temperature difference that is obtained based on the specified outlet water temperature and the current outlet water temperature; the function $A=f(\Delta T)$ is described as follows:

$\Delta T=Ts+To$, where Ts represents the specified outlet water temperature and To represents the current outlet water temperature;
$A=Ka*\Delta T$, where Ka represents a preset first temperature difference gain, and Ka is obtained based on experimental data and is generally a fixed value;
when the current outlet water temperature difference increases, a value of A increases, EL increases accordingly, and the compressor frequency rises; or
when the current outlet water temperature difference decreases, a value of A decreases, EL decreases accordingly, and the compressor frequency drops.
B represents a preset energy level gain; this value is used to adapt to a case in which when a total quantity of energy level ranges changes, modifying the value of B can keep the corresponding control policy unchanged; for example, when the interval 1 Hz is changed to 0.5 Hz in the foregoing table, the total quantity of energy level ranges is doubled, and the value of B is changed to $2*B$ accordingly.

C represents an accumulated value determined by the function $C=f(\Delta T, T)$; the function $C=f(\Delta T, T)$ is described as follows:

$C=Kc*\Delta T*\Delta t$, where Kc represents a preset second temperature difference gain, and Kc is obtained based on experimental data and is generally a fixed value;
$\Delta T=Ts+To$, where Ts represents the specified outlet water temperature and To represents the current outlet water temperature;
$\Delta t=t_n-t_{n-1}$, where $\Delta t$ represents a time interval, $t_n$ represents a time at which a value of C is currently calculated, and $t_{n-1}$ represents a time at which a value of C is calculated in the previous period; a program calculates the value of C once every $\Delta t$; when the temperature difference $\Delta T\neq0$, the value of C is used to implement fine adjustment of EL.

In this embodiment, the equipment end uses an inverter compressor heat pump apparatus instead of an existing fixed-frequency heat pump, so that when the terminal load of the heat pump system changes, the compressor frequency of the equipment end can be adjusted, so as to achieve the purposes of dynamically adjusting the outlet water temperature and keeping the outlet water temperature constant.

In this embodiment of this application, the current outlet water temperature of the equipment end is detected in real time using a temperature sensor; the specified outlet water temperature is obtained from the centralized controller, so as to obtain the current outlet water temperature difference; and the current compressor energy level range is determined based on the current outlet water temperature difference, and then the preset energy level range table is queried to obtain the corresponding current compressor frequency, so as to control the compressor of the inverter compressor heat pump by using the current compressor frequency, so that during the operation of the heat pump system, the compressor frequency of the heat pump system can be dynamically adjusted following the specified outlet water temperature and the current outlet water temperature, thereby ensuring that the water temperature supplied to the terminal by the water pump is kept constant. In this way, when the load of the terminal changes, the affected outlet water temperature change causes the equipment to adjust the compressor frequency so that the current outlet water temperature can be kept constant, and at the same time, the equipment adapts to the change of the terminal load.

Second embodiment of this application:

Based on the first embodiment of this application, the second embodiment of this application provides a water temperature control method for a heat pump system, where the method specifically includes the following steps:

Step S1: Before a compressor is started, collect a current outlet water temperature of an equipment end by using a water temperature monitoring sensor, and obtain a specified outlet water temperature from a centralized controller, so as to calculate a current outlet water temperature difference $\Delta T1$ based on the specified outlet water temperature and the current outlet water temperature;
calculate a value of A (A1) based on the current outlet water temperature difference, where a value of C (C1) is 0 in this case;
after a current compressor energy level range EL (ELI) is calculated, look up Table 1 to find a corresponding current compressor frequency (F1), set a compressor frequency of the equipment end as F1, and control the compressor to operate at the current compressor frequency (F1).

Step S2: After the compressor is started at the current compressor frequency (F1) and a preset time $\Delta t$ is reached, calculate the value of A (A2) and the value of C (C2) again;

based on a last calculated energy level EL (EL2), look up Table 1 to find a corresponding current compressor frequency (F2), set a compressor frequency as F2, and control the compressor to operate at the current compressor frequency (F2).

Step S3: Determine the current compressor energy level range based on the current outlet water temperature difference, which is specifically as follows:

determine the current compressor energy level range based on the current outlet water temperature difference at any preset time point after the compressor is started, where a time interval between two adjacent preset time points is $\Delta t$;

to be specific, after step S2 is completed, calculate the value of A (An) and the value of C (Cn) again every the preset time $\Delta t$;

replace An-1 in an extreme EL value (ELn-1) of the previous period with the An calculated this time, and then accumulate the value of C after the replacement to obtain the latest EL value (ELn);

finally, based on the energy level EL (ELn), look up Table 1 to find a corresponding current compressor frequency (Fn), set a compressor frequency as Fn, and control the compressor to operate at the current compressor frequency (Fn).

Step S4: Determine whether the current outlet water temperature difference is within a preset temperature difference threshold range;

if the current outlet water temperature difference is within the preset temperature difference threshold range, keep the current compressor energy level range that is determined based on the current outlet water temperature difference, and control the compressor of the inverter compressor heat pump by using the current compressor frequency corresponding to the current compressor energy level range; or

if the current outlet water temperature difference is not within the preset temperature difference threshold range, redetermine the current compressor energy level range to be a new energy level range based on the current outlet water temperature difference, and re-obtain a current compressor frequency corresponding to the new energy level range from the preset energy level range table, so as to control a compressor frequency rise or drop of the inverter compressor heat pump, where

a lower threshold and an upper threshold of the preset temperature difference threshold range are a specified negative temperature difference threshold and a specified positive temperature difference threshold, respectively; when the current outlet water temperature difference is greater than or equal to the specified positive temperature difference threshold, repeat step S2, that is, redetermine the current compressor energy level range to be the new energy level range based on the current outlet water temperature difference, and re-obtain the current compressor frequency corresponding to the new energy level range from the preset energy level range table, so as to control the compressor frequency rise of the inverter compressor heat pump; or

when the current outlet water temperature difference is less than or equal to the specified negative temperature difference threshold, go to step S3, that is, redetermine the current compressor energy level range to be the new energy level range based on the current outlet water temperature difference, and re-obtain the current compressor frequency corresponding to the new energy level range from the preset energy level range table, so as to control the compressor frequency drop of the inverter compressor heat pump.

In summary, according to the water temperature control method for a heat pump system provided in this application, the compressor frequency can be dynamically adjusted following the specified outlet water temperature and the current outlet water temperature, thereby ensuring that the water temperature supplied to the terminal by the water pump is kept constant. In this way, when the load of the terminal changes, the affected outlet water temperature change causes the equipment to adjust the compressor frequency so that the current outlet water temperature can be kept constant, and at the same time, the equipment adapts to the change of the terminal load.

Third embodiment of this application:

Corresponding to the foregoing water temperature control method for a heat pump system, the third embodiment of this application provides a heat pump system, where the heat pump system includes a centralized controller, an equipment end, a terminal, and a water pump arranged on a pipeline between the equipment end and the terminal; the equipment end has an inverter compressor heat pump; and the centralized controller is configured to:

detect a current outlet water temperature of the equipment end in real time, and obtain a current outlet water temperature difference between the current outlet water temperature and a specified outlet water temperature; and determine a current compressor energy level range based on the current outlet water temperature difference, and obtain a current compressor frequency corresponding to the current compressor energy level range from a preset energy level range table, so as to control a compressor of the inverter compressor heat pump by using the current compressor frequency.

A formula for determining the current compressor energy level range of the compressor is as follows: EL=A*B+C;

in the formula, EL represents the current compressor energy level range of the compressor, A represents a coefficient, B represents a preset energy level gain, and C represents an accumulated value;
A=Ka*$\Delta$T and C=Kc*$\Delta$T*$\Delta$t, where Ka represents a preset first temperature difference gain, $\Delta$T represents the current outlet water temperature difference, Kc represents a preset second temperature difference gain, and $\Delta$t represents a time interval.

In a preferred solution, the centralized controller is further configured to:
determine the current compressor energy level range based on the current outlet water temperature difference at any preset time point after the compressor is started, where a time interval between two adjacent preset time points is $\Delta$t.
In a preferred solution, the centralized controller is further configured to:

determine whether the current outlet water temperature difference is within a preset temperature difference threshold range;
if the current outlet water temperature difference is within the preset temperature difference threshold range, keep the current compressor energy level range that is determined based on the current outlet water temperature difference, and control the compressor of the inverter compressor heat pump by using the current compressor frequency corresponding to the current compressor energy level range; or
if the current outlet water temperature difference is not within the preset temperature difference threshold range, redetermine the current compressor energy level range to be a new energy level range based on the current outlet water temperature difference, and re-obtain a current compressor frequency corresponding to the new energy level range from the preset energy level range table, so as to control a compressor frequency rise or drop of the inverter compressor heat pump.

In a preferred solution, a lower threshold and an upper threshold of the preset temperature difference threshold range are a specified negative temperature difference threshold and a specified positive temperature difference threshold, respectively;
the centralized controller is further configured to:

when the current outlet water temperature difference is greater than or equal to the specified positive temperature difference threshold, redetermine the current compressor energy level range to be the new energy level range based on the current outlet water temperature difference, and re-obtain the current compressor frequency corresponding to the new energy level range from the preset energy level range table, so as to control the compressor frequency rise of the inverter compressor heat pump; or
when the current outlet water temperature difference is less than or equal to the specified negative temperature difference threshold, redetermine the current compressor energy level range to be the new energy level range based on the current outlet water temperature difference, and re-obtain the current compressor frequency corresponding to the new energy level range from the preset energy level range table, so as to control the compressor frequency drop of the inverter compressor heat pump.

It should be noted that, the previously described apparatus implementation is merely an example. The units described as separate parts can or cannot be physically separate, and parts displayed as units can or cannot be physical units, can be located in one position, or can be distributed on a plurality of network units. Some or all the modules may be selected according to actual needs to achieve the objectives of the solutions of the embodiments. In addition, in the accompanying drawings of the apparatus embodiments provided in this application, connection relationships between modules indicate that the modules have communication connections with each other, and may be specifically implemented as one or more communications buses or signal cables. A person of ordinary skill in the art may understand and implement the embodiments without creative efforts.

**Claims**

1. A water temperature control method for a heat pump system, wherein the heat pump system comprises an equipment end, a terminal, and a water pump arranged on a pipeline between the equipment end and the terminal; the equipment end has an inverter compressor heat pump; and the water temperature control method comprises at least the following steps:

detecting a current outlet water temperature of the equipment end in real time, and
obtaining a current outlet water temperature difference between the current outlet water temperature and a specified outlet water temperature; and
determining a current compressor energy level range based on the current outlet water temperature difference, and obtaining a current compressor frequency corresponding to the current compressor energy level range from a preset energy level range table, so as to control a compressor of the inverter compressor heat pump by using the current compressor frequency

**characterized in that**

a formula for determining the current compressor energy level range of the compressor is as follows: EL=A*B+C; in the formula, EL represents the current compressor energy level range of the compressor, A represents a coefficient, B represents a preset energy level gain, and C represents an accumulated value;
$A=Ka^{*}\Delta T$ and $C=Kc^{*}\Delta T^{*}\Delta t$, wherein Ka represents a preset first temperature difference gain, $\Delta T$ represents the current outlet water temperature difference, Kc represents a preset second temperature difference gain, and $\Delta t$ represents a time interval.

2. The water temperature control method for a heat pump system according to claim 1, wherein the step of determining the current compressor energy level range based on the current outlet water temperature difference is specifically: determining the current compressor energy level range based on the current outlet water temperature difference at any preset time point after the compressor is started, wherein a time interval between two adjacent preset time points is $\Delta t$.

3. The water temperature control method for a heat pump system according to claim 1, wherein the method further comprises:

determining whether the current outlet water temperature difference is within a preset temperature difference threshold range;
if the current outlet water temperature difference is within the preset temperature difference threshold range, keeping the current compressor energy level range that is determined based on the current outlet water temperature difference, and controlling the compressor of the inverter compressor heat pump by using the current compressor frequency corresponding to the current compressor energy level range; or
if the current outlet water temperature difference is not within the preset temperature difference threshold range, redetermining the current compressor energy level range to be a new energy level range based on the current outlet water temperature difference, and re-obtaining a current compressor frequency corresponding to the new energy level range from the preset energy level range table, so as to control a compressor frequency rise or drop of the inverter compressor heat pump.

4. The water temperature control method for a heat pump system according to claim 3, wherein a lower threshold and an upper threshold of the preset temperature difference threshold range are a specified negative temperature difference threshold and a specified positive temperature difference threshold, respectively;
the step in which if the current outlet water temperature difference is not within the preset temperature difference threshold range, the current compressor energy level range is redetermined to be a new energy level range based on the current outlet water temperature difference, and a current compressor frequency corresponding to the new energy level range is re-obtained from the preset energy level range table, so as to control a compressor frequency rise or drop of the inverter compressor heat pump is specifically:

when the current outlet water temperature difference is greater than or equal to the specified positive temperature difference threshold, redetermining the current compressor energy level range to be the new energy level range based on the current outlet water temperature difference, and re-obtaining the current compressor frequency corresponding to the new energy level range from the preset energy level range table, so as to control the compressor frequency rise of the inverter compressor heat pump; or
when the current outlet water temperature difference is less than or equal to the specified negative temperature difference threshold, redetermining the current compressor energy level range to be the new energy level range based on the current outlet water temperature difference, and re-obtaining the current compressor frequency corresponding to the new energy level range from the preset energy level range table, so as to control the compressor frequency drop of the inverter compressor heat pump.

5. A heat pump system, wherein the heat pump system comprises a centralized controller, an equipment end, a temperature sensor for detecting an outlet water temperature of the equipment end;
a terminal, and a water pump arranged on a pipeline between the equipment end and the terminal; the equipment end has an inverter compressor heat pump; and the centralized controller is configured to:

   detect a current outlet water temperature of the equipment end in real time, and obtain a current outlet water temperature difference between the current outlet water temperature and a specified outlet water temperature; and
   determine a current compressor energy level range based on the current outlet water temperature difference, and obtain a current compressor frequency corresponding to the current compressor energy level range from a preset energy level range table, so as to control a compressor of the inverter compressor heat pump by using the current compressor frequency
   **characterized in that**
   a formula for determining the current compressor energy level range of the compressor is as follows: $EL=A*B+C$; in the formula, EL represents the current compressor energy level range of the compressor, A represents a coefficient, B represents a preset energy level gain, and C represents an accumulated value;
   $A=Ka*\Delta T$ and $C=Kc*\Delta T*\Delta t$, wherein Ka represents a preset first temperature difference gain, $\Delta T$ represents the current outlet water temperature difference, Kc represents a preset second temperature difference gain, and $\Delta t$ represents a time interval.

6. The heat pump system according to claim 5, wherein the centralized controller is further configured to:

   determine the current compressor energy level range based on the current outlet water temperature difference at any preset time point after the compressor is started, wherein
   a time interval between two adjacent preset time points is $\Delta t$.

7. The heat pump system according to claim 5, wherein the centralized controller is further configured to:

   determine whether the current outlet water temperature difference is within a preset temperature difference threshold range;
   if the current outlet water temperature difference is within the preset temperature difference threshold range, keep the current compressor energy level range that is determined based on the current outlet water temperature difference, and control the compressor of the inverter compressor heat pump by using the current compressor frequency corresponding to the current compressor energy level range; or
   if the current outlet water temperature difference is not within the preset temperature difference threshold range, redetermine the current compressor energy level range to be a new energy level range based on the current outlet water temperature difference, and re-obtain a current compressor frequency corresponding to the new energy level range from the preset energy level range table, so as to control a compressor frequency rise or drop of the inverter compressor heat pump.

8. The heat pump system according to claim 7, wherein a lower threshold and an upper threshold of the preset temperature difference threshold range are a specified negative temperature difference threshold and a specified positive temperature difference threshold, respectively;
the centralized controller is further configured to:

   when the current outlet water temperature difference is greater than or equal to the specified positive temperature difference threshold, redetermine the current compressor energy level range to be the new energy level range based on the current outlet water temperature difference, and re-obtain the current compressor frequency corresponding to the new energy level range from the preset energy level range table, so as to control the compressor frequency rise of the inverter compressor heat pump; or
   when the current outlet water temperature difference is less than or equal to the specified negative temperature difference threshold, redetermine the current compressor energy level range to be the new energy level range based on the current outlet water temperature difference, and re-obtain the current compressor frequency corresponding to the new energy level range from the preset energy level range table, so as to control the compressor frequency drop of the inverter compressor heat pump.

**Patentansprüche**

1.  Verfahren zur Regelung der Wassertemperatur für ein Wärmepumpensystem, wobei das Wärmepumpensystem ein Geräteende, einen Anschluss und eine Wasserpumpe umfasst, die in einer Rohrleitung zwischen dem Geräteende und dem Anschluss angeordnet ist; das Geräteende eine Inverter-Verdichter-Wärmepumpe aufweist; und das Verfahren zur Regelung der Wassertemperatur mindestens die folgenden Schritte umfasst:

    Erfassen einer gegenwärtigen Auslasswassertemperatur des Geräteendes in Echtzeit und Erhalten einer gegenwärtigen Auslasswasser-Temperaturdifferenz zwischen der gegenwärtigen Auslasswassertemperatur und einer spezifizierten Auslasswassertemperatur; und
    Bestimmen eines gegenwärtigen Verdichter-Energiepegelbereichs auf der Grundlage der gegenwärtigen Auslasswasser-Temperaturdifferenz und Erhalten einer gegenwärtigen Verdichterrfrequenz, die dem gegenwärtigen Verdichter-Energiepegelbereich entspricht, aus einer voreingestellten Energiepegelbereichstabelle, um einen Verdichter der Inverter-Verdichter-Wärmepumpe unter Verwendung der gegenwärtigen Verdichterfrequenz zu steuern,
    die **dadurch gekennzeichnet ist,**
    **dass** eine Formel zum Bestimmen des gegenwärtigen Verdichter-Energiepegelbereichs des Verdichters wie folgt ist: EL=A*B+C;
    In der Formel steht EL dabei für den aktuellen Energiepegelbereich des Verdichters, A für einen Koeffizienten, B für eine voreingestellte Energiepegelverstärkung und C für einen kumulierten Wert;
    A=Ka*$\Delta$T und C=Kc*$\Delta$T*$\Delta$t, wobei Ka eine voreingestellte erste Temperaturdifferenzverstärkung, AT die aktuelle Auslasswasser-Temperaturdifferenz, Kc eine voreingestellte zweite Temperaturdifferenzverstärkung und $\Delta$t ein Zeitintervall darstellen.

2.  Wassertemperaturregelungsverfahren für ein Wärmepumpensystem nach Anspruch 1, wobei der Schritt der Bestimmung des aktuellen Verdichter-Energiepegelbereichs auf der Grundlage der aktuellen Auslasswasser-Temperaturdifferenz spezifisch ist:
    Bestimmen des aktuellen Verdichter-Energiepegelbereichs auf der Grundlage der aktuellen Auslasswasser-Temperaturdifferenz zu einem beliebigen voreingestellten Zeitpunkt nach dem Start des Verdichters, wobei ein Zeitintervall zwischen zwei benachbarten voreingestellten Zeitpunkten $\Delta$t beträgt.

3.  Verfahren zur Regelung der Wassertemperatur für ein Wärmepumpensystem nach Anspruch 1, wobei das Verfahren ferner umfasst:

    Bestimmung, ob die aktuelle Temperaturdifferenz des Auslasswassers innerhalb eines voreingestellten Temperaturdifferenz-Schwellenbereichs liegt;
    wenn die aktuelle Auslasswasser-Temperaturdifferenz innerhalb des voreingestellten Temperaturdifferenz-Schwellenbereichs liegt, Beibehaltung des aktuellen Verdichter-Energiepegelbereichs, der auf der Grundlage der aktuellen Auslasswasser-Temperaturdifferenz bestimmt wird, und Steuerung des Verdichters der Inverter-Verdichter-Wärmepumpe unter Verwendung der aktuellen Verdichterfrequenz entsprechend dem aktuellen Verdichter-Energiepegelbereich; oder
    wenn die aktuelle Auslasswasser-Temperaturdifferenz nicht innerhalb des voreingestellten Temperaturdifferenz-Schwellenbereichs liegt, Neubestimmen des aktuellen Verdichter-Energiepegelbereichs zu einem neuen Energiepegelbereich auf der Grundlage der aktuellen Auslasswasser-Temperaturdifferenz und Wiedergewinnen einer aktuellen Verdichterrfrequenz, die dem neuen Energiepegelbereich aus der voreingestellten Energiepegelbereichstabelle entspricht, um einen Verdichterfrequenzanstieg oder -abfall der Inverter-Verdichter-Wärmepumpe zu steuern.

4.  Verfahren zur Regelung der Wassertemperatur in einem Wärmepumpensystem nach Anspruch 3, wobei ein unterer Schwellenwert und ein oberer Schwellenwert des voreingestellten Temperaturdifferenzschwellenbereichs ein bestimmter negativer Temperaturdifferenzschwellenwert bzw. ein bestimmter positiver Temperaturdifferenzschwellenwert sind;
    der Schritt, bei dem, wenn die aktuelle Auslasswasser-Temperaturdifferenz nicht innerhalb des voreingestellten Temperaturdifferenz-Schwellenwertbereichs liegt, der aktuelle Verdichter-Energiepegelbereich neu bestimmt wird, um ein neuer Energiepegelbereich auf der Grundlage der aktuellen Auslasswasser-Temperaturdifferenz zu sein, und eine aktuelle Verdichterfrequenz, die dem neuen Energiepegelbereich entspricht, aus der voreingestellten Energiepegelbereichstabelle wiedergewonnen wird, um einen Kompressorfrequenzanstieg oder -abfall der Inverter-Kompressor-Wärmepumpe zu steuern, spezifisch ist:

wenn die aktuelle Auslasswasser-Temperaturdifferenz größer oder gleich dem spezifizierten positiven Temperaturdifferenz-Schwellenwert ist, Neubestimmen des aktuellen Verdichter-Energiepegelbereichs als den neuen Energiepegelbereich auf der Grundlage der aktuellen Auslasswasser-Temperaturdifferenz und Wiedergewinnen der aktuellen Verdichterfrequenz entsprechend dem neuen Energiepegelbereich aus der voreingestellten Energiepegelbereichstabelle, um den Verdichterfrequenzanstieg der Inverterverdichter-Wärmepumpe zu steuern; oder, wenn die aktuelle Auslasswasser-Temperaturdifferenz kleiner oder gleich der spezifizierten negativen Temperaturdifferenzschwelle ist, Neubestimmen des aktuellen Verdichter-Energiepegelbereichs als den neuen Energiepegelbereich auf der Grundlage der aktuellen Auslasswasser-Temperaturdifferenz und Wiedergewinnen der aktuellen Verdichterfrequenz, die dem neuen Energiepegelbereich entspricht, aus der voreingestellten Energiepegelbereichstabelle, um den Verdichterfrequenzabfall der Inverterverdichter-Wärmepumpe zu steuern.

5. Ein Wärmepumpensystem, wobei das Wärmepumpensystem eine zentralisierte Steuerung, eine Geräteseite, einen Temperatursensor zum Erfassen einer Auslasswassertemperatur ders Geräteendes umfasst; ein Terminal und eine Wasserpumpe, die in einer Rohrleitung zwischen dem Geräteende und dem Terminal angeordnet ist; das Geräteende hat eine Inverter-Verdichter-Wärmepumpe; und die zentralisierte Steuerung ist konfiguriert, um: Erfassen einer aktuellen Auslasswassertemperatur des Geräteendes in Echtzeit und Erhalten einer aktuellen Auslasswasser-Temperaturdifferenz zwischen der aktuellen Auslasswassertemperatur und einer spezifizierten Auslasswassertemperatur; und Bestimmen eines aktuellen Verdichter-Energiepegelbereichs auf der Grundlage der aktuellen Auslasswasser-Temperaturdifferenz und Erhalten einer aktuellen Verdichterfrequenz, die dem aktuellen Verdichter-Energiepegelbereich entspricht, aus einer voreingestellten Energiepegelbereichstabelle, um einen Verdichter der Inverterverdichter-Wärmepumpe unter Verwendung der aktuellen Verdichterfrequenz zu steuern, **dadurch gekennzeichnet, dass**

eine Formel zur Bestimmung des aktuellen Verdichter-Energiepegelbereichs des Verdichters wie folgt lautet:

$$EL=A*B+C;$$

In der Formel steht EL dabei für den aktuellen Energiepegelbereich des Verdichters, A für einen Koeffizienten, B für eine voreingestellte Energiepegelverstärkung und C für einen kumulierten Wert; $A=Ka*\Delta T$ und $C=Kc*\Delta T*\Delta t$, wobei Ka eine voreingestellte erste Temperaturdifferenzverstärkung, AT die aktuelle Auslasswasser-Temperaturdifferenz, Kc eine voreingestellte zweite Temperaturdifferenzverstärkung und $\Delta t$ ein Zeitintervall darstellen.

6. Wärmepumpensystem nach Anspruch 5, wobei der zentralisierte Regler ferner so konfiguriert ist, dass er: Bden aktuellen Verdichter-Energiepegelbereich auf der Grundlage der aktuellen Auslasswasser-Temperaturdifferenz zu einem beliebigen voreingestellten Zeitpunkt nach dem Start des Verdichters bestimmt, wobei ein Zeitintervall zwischen zwei benachbarten voreingestellten Zeitpunkten $\Delta t$ beträgt.

7. Wärmepumpensystem nach Anspruch 5, wobei der zentralisierte Regler ferner so konfiguriert ist, dass er:

feststellt, ob die aktuelle Temperaturdifferenz des Auslasswassers innerhalb eines voreingestellten Temperaturdifferenz-Schwellenbereichs liegt;
wenn die aktuelle Auslasswasser-Temperaturdifferenz innerhalb des voreingestellten Temperaturdifferenz-Schwellenbereichs liegt, den aktuellen Verdichter-Energiepegelbereich beibehält, der auf der Grundlage der aktuellen Auslasswasser-Temperaturdifferenz bestimmt wird, und den Verdichter der Inverter-Verdichter-Wärmepumpe unter Verwendung der aktuellen Verdichterfrequenz entsprechend dem aktuellen Verdichter-Energiepegelbereich steuert; oder
wenn die aktuelle Auslasswasser-Temperaturdifferenz nicht innerhalb des voreingestellten Temperaturdifferenz-Schwellenwertbereichs liegt, den aktuellen Verdichter-Energiepegelbereich auf der Grundlage der aktuellen Auslasswasser-Temperaturdifferenz zu einem neuen Energiepegelbereich umdefiniert und eine aktuelle Verdichterfrequenz, die dem neuen Energiepegelbereich entspricht, aus der voreingestellten neuen Energiepegelbereichstabelle erhält, um einen Verdichterfrequenzanstieg oder -abfall der Inverter-Verdichter-Wärmepumpe zu steuern.

8. Wärmepumpensystem nach Anspruch 7, wobei ein unterer Schwellenwert und ein oberer Schwellenwert des voreingestellten Temperaturdifferenz-Schwellenbereichs ein vorgegebener negativer Temperaturdifferenz-Schwellenwert bzw. ein vorgegebener positiver Temperaturdifferenz-Schwellenwert sind; der zentralisierte Regeler ist ferner so konfiguriert, dass er:

wenn die aktuelle Auslasswasser-Temperaturdifferenz größer oder gleich dem spezifizierten positiven Temperaturdifferenz-Schwellenwert ist, den aktuellen Verdichter-Energiepegelbereich als neuen Energiepegelbereich auf der Grundlage der aktuellen Auslasswasser-Temperaturdifferenz neu bestimmt und die aktuelle Verdichterfrequenz, die dem neuen Energiepegelbereich entspricht, aus der voreingestellten Energiepegelbereichstabelle neu erhält, um den Verdichterfrequenzanstieg der Inverter-Verdichter-Wärmepumpe zu steuern; oder wenn die aktuelle Auslasswasser-Temperaturdifferenz kleiner oder gleich dem spezifizierten negativen Temperaturdifferenz-Schwellenwert ist, den aktuellen Verdichter-Energiepegelbereich als neuen Energiepegelbereich auf der Grundlage der aktuellen Auslasswasser-Temperaturdifferenz neu bestimmt und die aktuelle Verdichterfrequenz, die dem neuen Energiepegelbereich entspricht, aus der voreingestellten Energiepegelbereichstabelle erhält, um den Verdichterfrequenzabfall der Inverter-Verdichter-Wärmepumpe zu steuern.

## Revendications

1.  Un procédé de contrôle de la température de l'eau pour un système de pompe à chaleur, dans lequel le système de pompe à chaleur possède une extrémité d'équipement, un terminal, et une pompe à eau disposée sur une canalisation entre l'extrémité d'équipement et le terminal ; l'extrémité d'équipement dispose d'une pompe à chaleur à compresseur inverseur ; et le procédé de contrôle de la température de l'eau comporte au moins les étapes suivantes

    détecter une température d'eau de sortie actuelle de l'extrémité de l'équipement en temps réel, et obtenir une différence de température d'eau de sortie actuelle entre la température d'eau de sortie actuelle et une température d'eau de sortie spécifiée ; et déterminer une plage de niveaux d'énergie de compresseur actuelle sur la base de la différence de température d'eau de sortie actuelle, et obtenir une fréquence de compresseur actuelle correspondant à la plage de niveaux d'énergie de compresseur actuelle à partir d'un tableau de plages de niveaux d'énergie prédéfinies, de façon à contrôler un compresseur de la pompe à chaleur à compresseur inverseur en utilisant la fréquence de compresseur actuelle,
    le procédé étant **caractérisé en**
    **ce qu'**une formule pour déterminer la plage de niveaux d'énergie de compresseur actuelle du compresseur est la suivante : $EL=A^*B+C$ ;
    dans la formule, EL représente la plage de niveau d'énergie actuelle du compresseur, A représente un coefficient, B représente une augmentation de niveau d'énergie prédéfinie, et C représente une valeur accumulée ;
    $A=Ka^*\Delta T$ et $C=Kc^*\Delta T^*\Delta t$, où Ka représente une première différence de température préréglée, AT représente la différence de température d'eau de sortie actuelle, Kc représente une seconde différence de température préréglée, et $\Delta t$ représente un intervalle de temps.

2.  Procédé de contrôle de la température de l'eau pour un système de pompe à chaleur selon la revendication 1, dans lequel l'étape consistant à déterminer la plage de niveau d'énergie du compresseur actuel sur la base de la différence de température d'eau de sortie actuelle est spécifiée :
    déterminer la plage de niveau d'énergie actuelle du compresseur sur la base de la différence de température actuelle de l'eau de sortie à tout point de temps prédéfini après le démarrage du compresseur, dans lequel un intervalle de temps entre deux points de temps prédéfinis adjacents est $\Delta t$.

3.  Procédé de contrôle de la température de l'eau pour un système de pompe à chaleur selon la revendication 1, dans lequel le procédé comprend par ailleurs :

    déterminer si la différence de température actuelle de l'eau de sortie se situe dans une plage de seuil de différence de température prédéfinie ;
    si la différence de température actuelle de l'eau de sortie se situe dans la plage de seuil de différence de température prédéfinie, le maintien de la plage de niveau d'énergie actuelle du compresseur qui est déterminée sur la base de la différence de température actuelle de l'eau de sortie, et la commande du compresseur de la pompe à chaleur à compresseur inverseur en utilisant la fréquence actuelle du compresseur correspondant à la plage de niveau d'énergie actuelle du compresseur ; ou
    si la différence de température de l'eau de sortie actuelle ne se situe pas dans la plage de seuil de différence de température prédéfinie, redéterminer la plage de niveau d'énergie du compresseur actuelle comme étant une nouvelle plage de niveau d'énergie sur la base de la différence de température de l'eau de sortie actuelle, et obtenir à nouveau une fréquence de compresseur actuelle correspondant à la nouvelle plage de niveau d'énergie à partir du tableau de plage de niveau d'énergie prédéfinie, de manière à contrôler une augmentation ou une réduction de la fréquence du compresseur de la pompe à chaleur à compresseur inverseur.

4. Procédé de contrôle de la température de l'eau pour un système de pompe à chaleur selon la revendication 3, dans lequel un seuil inférieur et un seuil supérieur de la plage de seuils de différence de température prédéfinie correspondent respectivement à un seuil de différence de température négative spécifiée et à un seuil de différence de température positive spécifiée ;

l'étape dans laquelle, si la différence de température de l'eau de sortie actuelle ne se situe pas dans la plage de seuil de différence de température prédéfinie, la plage de niveau d'énergie du compresseur actuel est redéterminée pour représenter une nouvelle plage de niveau d'énergie sur la base de la différence de température de l'eau de sortie actuelle, et une fréquence de compresseur actuelle correspondant à la nouvelle plage de niveau d'énergie est obtenue à nouveau à partir de la table de plage de niveau d'énergie prédéfinie, de manière à contrôler spécifiquement une augmentation ou une réduction de la fréquence du compresseur de la pompe à chaleur à compresseur inverseur :

lorsque la différence de température de l'eau de sortie actuelle est supérieure ou égale au seuil de différence de température positive spécifié, redéterminer la plage de niveau d'énergie du compresseur actuel pour qu'elle devienne la nouvelle plage de niveau d'énergie sur la base de la différence de température de l'eau de sortie actuelle, et obtenir à nouveau la fréquence du compresseur actuel correspondant à la nouvelle plage de niveau d'énergie à partir du tableau de plage de niveau d'énergie prédéfini, de manière à contrôler l'augmentation de la fréquence du compresseur de la pompe à chaleur à compresseur inverseur ; ou lorsque la différence de température de l'eau de sortie actuelle est inférieure ou égale au seuil de différence de température négative spécifié, redéterminer la plage de niveau d'énergie du compresseur actuel pour qu'elle devienne la nouvelle plage de niveau d'énergie sur la base de la différence de température de l'eau de sortie actuelle, et obtenir à nouveau la fréquence du compresseur actuel correspondant à la nouvelle plage de niveau d'énergie à partir du tableau de plage de niveau d'énergie prédéfini, de manière à contrôler la baisse de fréquence du compresseur de la pompe à chaleur à compresseur inverseur.

5. Système de pompe à chaleur, dans lequel le système de pompe à chaleur est constitué d'un contrôleur centralisé, d'une extrémité d'équipement, d'un capteur de température pour détecter une température d'eau de sortie de l'extrémité d'équipement ;

détecter une température d'eau de sortie actuelle de l'extrémité de l'équipement en temps réel, et obtenir une différence de température d'eau de sortie actuelle entre la température d'eau de sortie actuelle et une température d'eau de sortie spécifiée ; et déterminer une plage de niveaux d'énergie de compresseur actuelle sur la base de la différence de température d'eau de sortie actuelle, et obtenir une fréquence de compresseur actuelle correspondant à la plage de niveaux d'énergie de compresseur actuelle à partir d'un tableau de plages de niveaux d'énergie prédéfinies, de façon à contrôler un compresseur de la pompe à chaleur à compresseur inverseur en utilisant la fréquence de compresseur actuelle, le procédé étant **caractérisé par le fait que** la formule pour déterminer la plage de niveau d'énergie actuelle du compresseur est la suivante : $EL=A*B+C$ ; dans la formule, EL représente la plage de niveau d'énergie actuelle du compresseur, A représente un coefficient, B représente une augmentation de niveau d'énergie prédéfinie, et C représente une valeur accumulée ; $A=Ka*\Delta T$ et $C=Kc*\Delta T*\Delta t$, où Ka représente une première différence de température préréglée, AT représente la différence de température d'eau de sortie actuelle, Kc représente une seconde différence de température préréglée, et $\Delta t$ représente un intervalle de temps.

6. Système de pompe à chaleur selon la revendication 5, dans lequel le contrôleur centralisé est configuré pour : déterminer la plage de niveau d'énergie actuelle du compresseur sur la base de la différence de température actuelle de l'eau de sortie à tout point de temps prédéfini après le démarrage du compresseur, dans lequel un intervalle de temps entre deux points de temps prédéfinis adjacents est $\Delta t$.

7. Système de pompe à chaleur selon la revendication 5, dans lequel le contrôleur centralisé est configuré pour :

déterminer si la différence de température actuelle de l'eau de sortie se situe dans une plage de seuil de différence de température prédéfinie ;
si la différence de température actuelle de l'eau de sortie se situe dans la plage de seuil de différence de température prédéfinie, le maintien de la plage de niveau d'énergie actuelle du compresseur qui est déterminée sur la base de la différence de température actuelle de l'eau de sortie, et la commande du compresseur de la pompe à chaleur à compresseur inverseur en utilisant la fréquence actuelle du compresseur correspondant à la plage de niveau d'énergie actuelle du compresseur ; ou

si la différence de température de l'eau de sortie actuelle ne se situe pas dans la plage de seuil de différence de température prédéfinie, redéterminer la plage de niveau d'énergie du compresseur actuelle comme étant une nouvelle plage de niveau d'énergie sur la base de la différence de température de l'eau de sortie actuelle, et obtenir à nouveau une fréquence de compresseur actuelle correspondant à la nouvelle plage de niveau d'énergie à partir du tableau de plage de niveau d'énergie prédéfinie, de manière à contrôler une augmentation ou une réduction de la fréquence du compresseur de la pompe à chaleur à compresseur inverseur.

8. Système de pompe à chaleur selon la revendication 7, dans lequel un seuil inférieur et un seuil supérieur de la plage de seuils de différence de température prédéfinie correspondent respectivement à un seuil de différence de température négative spécifiée et à un seuil de différence de température positive spécifiée ;
le contrôleur centralisé est en outre configuré pour :

lorsque la différence de température de l'eau de sortie actuelle est supérieure ou égale au seuil de différence de température positive spécifié, redéterminer la plage de niveau d'énergie du compresseur actuel pour qu'elle devienne la nouvelle plage de niveau d'énergie sur la base de la différence de température de l'eau de sortie actuelle, et obtenir à nouveau la fréquence du compresseur actuel correspondant à la nouvelle plage de niveau d'énergie à partir du tableau de plage de niveau d'énergie prédéfini, de manière à contrôler l'augmentation de la fréquence du compresseur de la pompe à chaleur à compresseur inverseur ; ou

lorsque la différence de température de l'eau de sortie actuelle est inférieure ou égale au seuil de différence de température négative spécifié, redéterminer la plage de niveau d'énergie du compresseur actuel pour qu'elle devienne la nouvelle plage de niveau d'énergie sur la base de la différence de température de l'eau de sortie actuelle, et obtenir à nouveau la fréquence du compresseur actuel correspondant à la nouvelle plage de niveau d'énergie à partir du tableau de plage de niveau d'énergie prédéfini, de manière à contrôler la baisse de la fréquence du compresseur de la pompe à chaleur à compresseur inverseur.

FIG. 1

| Detect a current outlet water temperature of the equipment end in real time, and obtain a current outlet water temperature difference between the current outlet water temperature and a specified outlet water temperature | S101 |

| Determine a current compressor energy level range based on the current outlet water temperature difference, and obtain a current compressor frequency corresponding to the current compressor energy level range from a preset energy level range table, so as to control a compressor of an inverter compressor heat pump by using the current compressor frequency | S102 |

FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911042851
- EP 3333502 A1
- EP 3299744 A1